# EUROPEAN PATENT APPLICATION

(11) **EP 2 124 199 A1**
(43) Date of publication of application: **25.11.2009**
(21) Application number: 08156458.5
(22) Date of filing: 19.05.2008
(51) Int. Cl.: G07C 9/00, G06Q 10/00, G07F 7/10

(54) **Assembly for the issue of a document**

(71) Applicant: Ergotrans B.V., 7324 AL Apeldoorn (NL)
(72) Inventor: Beltman, Frederik Antonie, 7437 GA Bathmen (NL)
(74) Representative: Voncken, Bartholomeus Maria Ch.

(57) **Abstract**

An assembly for the issue of a document, for example a passport, which comprises a data chip, to a recipient, is provided with
- first means for providing the recipient upon request with a unique collecting voucher for said document, said first means comprising identification means for determining identification data of the recipient and loading said data in a RFID-tag to be attached irreversibly to said collecting voucher or in a data chip already present thereon, wherein the first means further comprise transmitting means for transmitting to a document manufacturer identification data for loading said data in the data chip of the document to be issued;
- storage means for safely storing the document upon receipt thereof from the document manufacturer;
- verification means for at least verifying the collecting voucher upon presentation by the recipient;
- issue means for issuing the document; and
- transferring means for transferring the document from the storage means towards the issue means.

## Description

The invention relates to an assembly for the issue of a document, for example a passport, which comprises a data chip, to a recipient.

Whereas at present certain documents, such as for example passports, driver licences or other confidential documents, are handed over to a recipient personally by an employee of the issuing authority, there is an ongoing demand for a safer manner to issue such documents. The documents to which the present invention relates are provided with a data chip which comprises specific data with respect to the document and its holder, such as for example biometric data of the holder.

In accordance with the present invention the assembly comprises
- first means for providing the recipient upon request with a unique collecting voucher for said document, said first means comprising identification means for determining identification data of the recipient and loading said data in a RFID-tag to be attached irreversibly to said collecting voucher or in a data chip already present thereon, wherein the first means further comprise transmitting means for transmitting to a document manufacturer identification data for loading said data in the data chip of the document to be issued;
- storage means for safely storing the document upon receipt thereof from the document manufacturer;
- verification means for at least verifying the collecting voucher upon presentation by the recipient;
- issue means for issuing the document; and
- transferring means for transferring the document from the storage means towards the issue means.

Using such an assembly allows to issue a document in a safe and reliable manner. The identification data (which may be an application number) on the RFID-tag or data chip already present are used by the verification means to determine the identity of the recipient upon claiming his document. The identification data sent to the manufacturer also will be used to verify the identity of the recipient and may be different data. The issue means only will issue the document when the verification means have verified the identity of the recipient.

In an embodiment the identification means comprise means for determining biometric data of the recipient, such as for example a device for taking fingerprints and/or for making a facial scan. Said biometric data are transmitted to the manufacturer of the document to be included in the data chip of the document.

Preferably the collecting voucher is a former document, such as a passport, to be replaced by the document to be issued. In such a case also a data chip already present of the former document may be used to load the data in. However, when such a former document does not exist, the collecting voucher is a dedicated voucher handed over to the recipient when filing a request for a new document (in which case an RFID-tag will be used to load the data in).

Further the first means may comprise means for encrypting the data, for example as an application number, on the RFID-tag or data chip.

In an embodiment the storage means comprise a safe room for the documents, such as for example a safe in a protected area.

The storage means further may comprise scanning means for scanning MRZ-data of the document and a database for said MRZ-data. Said MRZ-data will be used to generate an access code for accessing the data on the data chip of the document to be issued. This will prevent unauthorised persons from reading the data on the data chip by means of a scanner (and using said data in any unauthorised manner).

Preferably the verification means comprise means for scanning the RFID-tag or data chip of the collecting voucher and means for, based upon the scanned data of the RFID-tag or data chip, determining the presence of the document to be issued in the storage means and for activating the transferring means for transferring the document from the storage means towards the issue means. In case the document is found not to be present in the storage means, the collecting voucher is returned to the recipient and the process of issuing the document is aborted.

In an embodiment the issue means comprise an access door to an issue station controlled by the verification means. When the verification means has read the RFID-tag or data chip on the collecting voucher the access door is opened.

When the issue station comprises a reception means for receiving the collecting voucher and for reading the RFID-tag or data chip and an issue port for the document to be issued, the recipient may present the collecting voucher. When the data on the RFID-tag or data chip are verified the document may be issued through the issue port which will open automatically then.

As a further safeguard it is possible that the issue station further comprises input means for a password.

In an embodiment the issue station comprises reading means for reading the data chip of the document to be issued. Thus it may be verified that indeed the correct document has been transferred from the storage means towards the issue station.

Preferably the reading means are controlled by the MRZ-data, which provide an access code to the data chip.

As a final check it is preferred that the issue station comprises scanning means for fingerprints and/or a facial scan and comparation means for comparing the scan results with the data on the data chip of the document to be issued. When the scan results match the data on the data chip the document will be issued.

Finally it is preferred that the issue station comprises means for invalidating and/or safeguarding the collecting voucher. Invalidating may mean destroying (shredding) or perforating, for example.

It is noted that it also is possible that the issue means provide the document to an employee of the issuing authority which, after checking the correctness of the document, will hand it over to the recipient. But also in such a case the verification means will check the collection voucher and compare the data of the RFID-tag or data chip thereof with the data in the storage database. That means that it is not possible to force such employee to hand out the document to an unauthorised person, because the storage means will not release the document without the collecting voucher being verified by the verification means.

Herinafter the invention will be elucidated while referring to the drawing, in which
Figure 1 shows a flow chart of the use of an embodiment of the assembly according to the invention during the stage of applying for a new document;
Figure 2 shows a flow chart of the use of an embodiment of the assembly according to the invention during the stage of storing a new document;
Figure 3 shows a flow chart of the use of an embodiment of the assembly according to the invention during the stage of issuing a document through an employee;
Figure 4 shows a flow chart of the use of an embodiment of the assembly according to the invention during the stage of issuing a document without an employee;
Figure 5 shows, schematically, an arrangement embodying features of the invention, and
Figure 6 shows, in different views, an embodiment of an issue station.

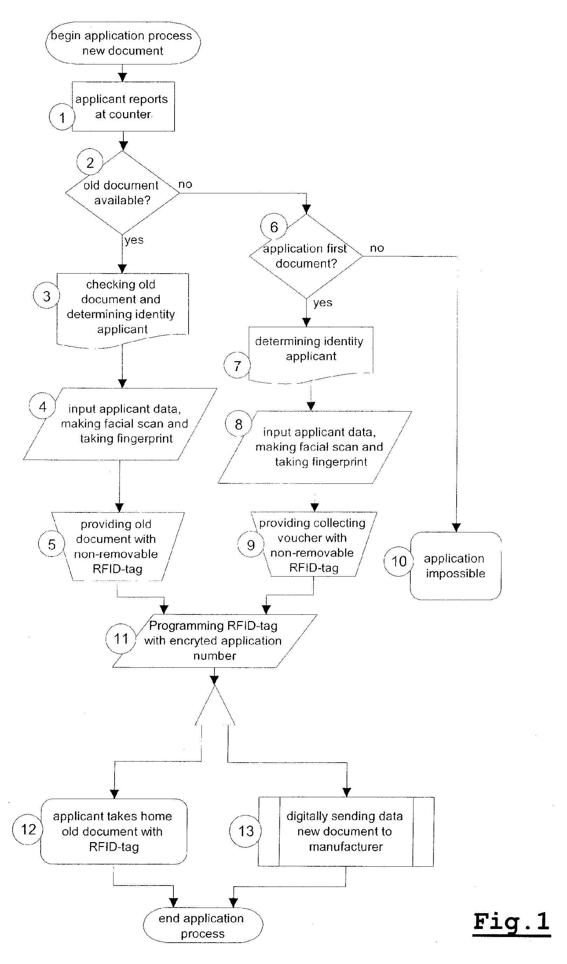

Firstly referring to figure 1, when the process for applying for a new document (hereinafter new passport) starts, at step 1 the applicant (who also will be the recipient of the new passport) checks in at a counter. Step 2 represents the check whether applicant provides an old passport or not. If so, the old passport is checked and the identity of the applicant is determined (step 3).

Next (step 4) data of the applicant are recorded. This preferably also includes the taking of fingerprints and/or making a facial scan (or determining other biometrical data) by identification means specially devised therefore. Whereas, as explained below, in the case of a dedicated collecting voucher latter is provided with a RFID-tag (step 5) in such a manner that the tag cannot be removed (without leaving evidence for its removal), in the case of an old passport acting as collecting voucher, also the data chip already present thereon cannot be removed (without leaving evidence for its removal).

If at step 2 no old passport is provided, one proceeds to step 6 during which it is determined whether the application relates to application for a first passport or not. If not, an application is not possible and the process ends (step 10). If so, however, the identity of the applicant is determined at step 7, after which data of the applicant are recorded (step 8). This preferably also includes the taking of fingerprints and/or making a facial scan by means specially devised therefore. Further a dedicated collecting voucher (thus, now, not an old passport) is provided with a RFID-tag (step 9) in such a manner that the tag cannot be removed (without leaving evidence for its removal).

In the situation of applying for a first passport, next the data chip or RFID-tag is programmed with an encrypted application number (step 11).

Finally, the applicant takes home its old passport/collecting voucher which is provided with the data chip or RFID-tag (step 12), whereas data with respect to the new passport (amongst which the determined data of the applicant and the biometrical data) are sent, by transmitting means, digitally to the manufacturer of the new passport (step 13) to be included at least partially in the data chip thereof. This ends the application stage .

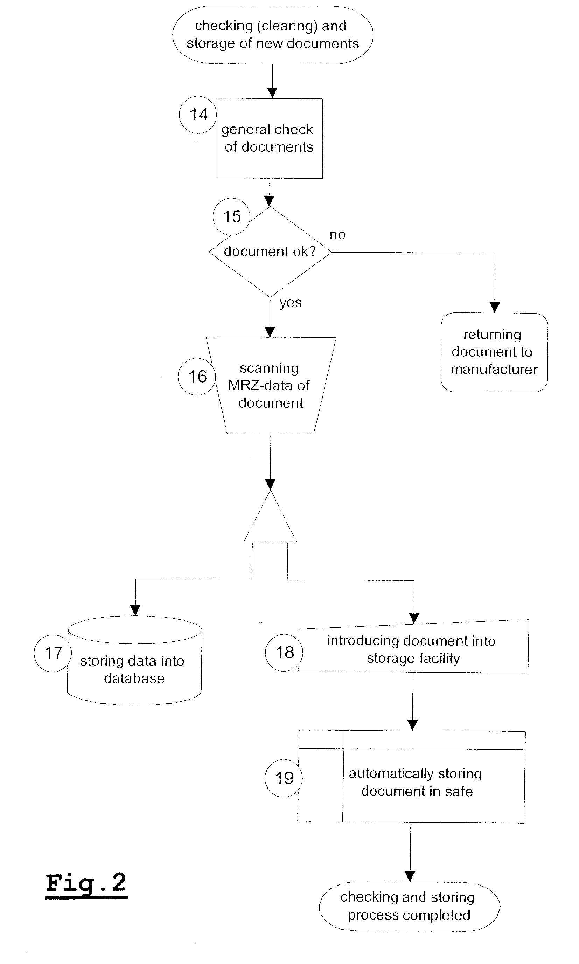

Next reference is made to figure 2, showing the stage of storing a new passport which has been manufactured as based upon the data digitally sent to the manufacturer (step 13 of figure 1). Firstly the new passport is checked (step 14) and it is determined (step 15) whether it is in good order. If not it is returned to the manufacturer.

If the new passport is in good order, MRZ-data thereof are scanned by scanning means (step 16) which successively are stored in a database (step 17) for generating an access code. The new passport itself is introduced into a storage facility (step 18) and is automatically stored in a safe (step 19). Herewith the stage of storing the new passport has come to an end. The passport remains in the safe and the applicant/recipient is notified of its presence.

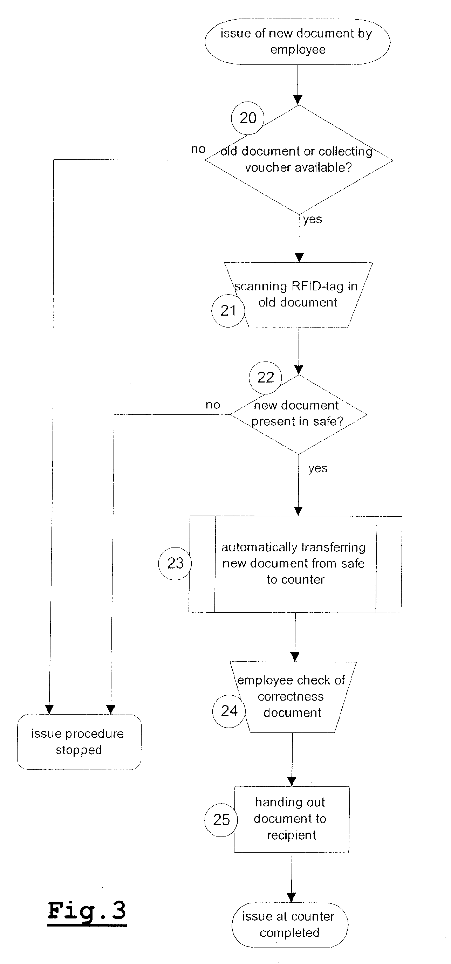

Figure 3 illustrates the stage of issuing the passport through an employee of the issuing authority. Firstly the employee requests the recipient to present the old passport (step 20). If the old passport is not presented, the issue process will stop.

If, however, the old passport (acting as collecting voucher) is presented, its data chip or RFID-tag is scanned by dedicated scanning means (step 21), based upon which the presence of the new passport in the safe is checked (step 22). When it appears that the new passport is not present, the process is aborted.

If the new passport is present in the safe it is automatically transferred to the counter of the employee by transferring means (step 23). The employee, at step 24, checks whether it is the correct passport and finally hands it over (step 25) to the recipient. This ends the issue of the passport by the employee.

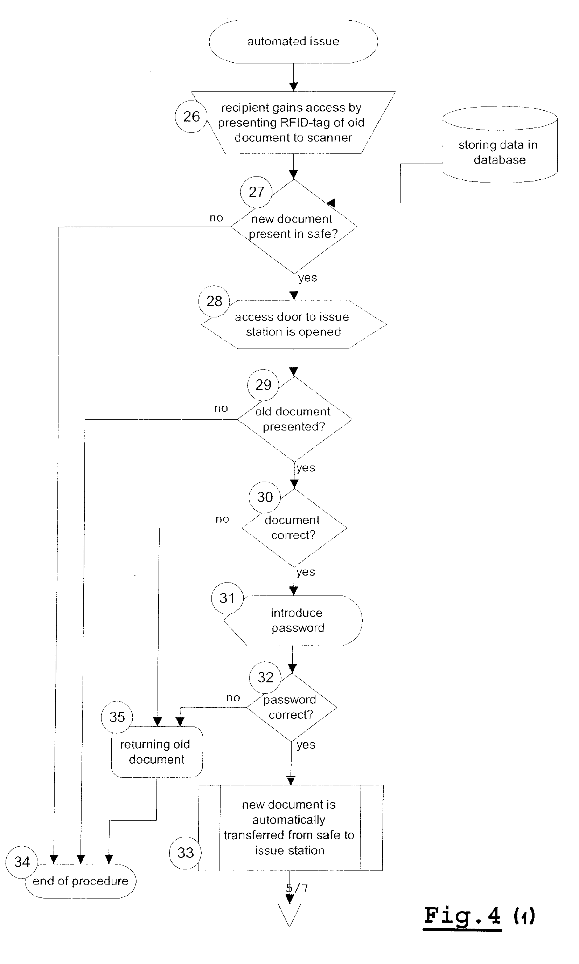

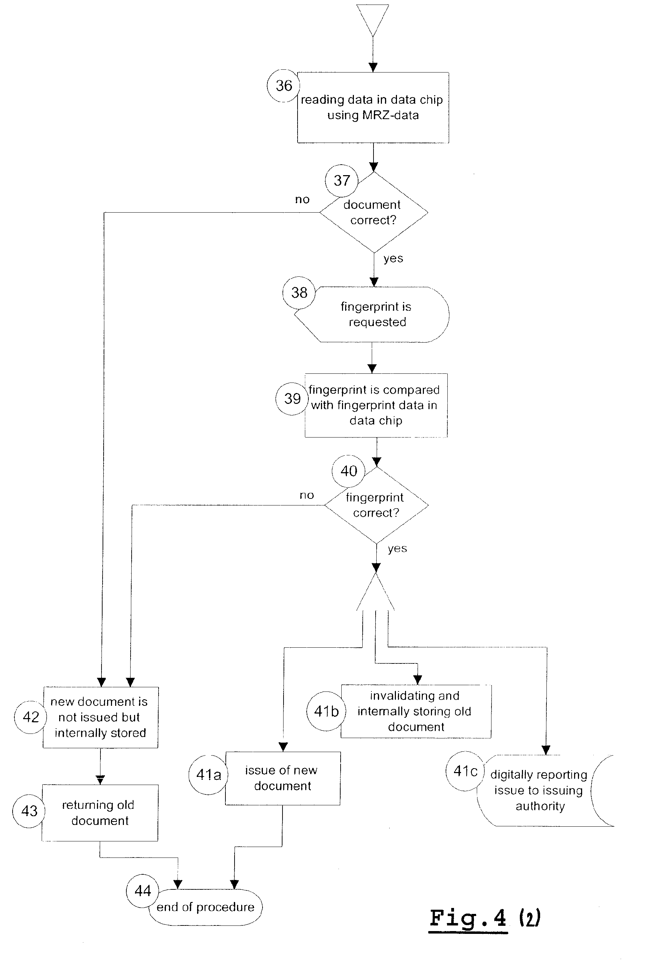

The automated issue of the new passport is illustrated by figure 4. Firstly, at step 26, the recipient presents the data chip or RFID-tag of its old passport to a scanner. Based upon data stored in the database the presence of the new passport is checked at step 27. If not present, the process ends (step 34). If present, however, an access door to an issue station is opened/unlocked (step 28).

When the recipient has entered the issue station he must introduce the old passport in a reception means (step 29) after which the reception means verifies the correctness of this old passport (step 30) (e.g. by reading an RFID-tag or a data chip).

When, after entering the issue station, no old passport/document is introduced into the reception means, the process is aborted (step 34). When an incorrect passport/document is introduced, it is returned to the recipient (step 35) whereafter the procedure is aborted (step 34).

When the introduced passport has been verified to be correct, the recipient has to enter a password or PIN-code (which, for example, may be a governmental password) and if this is correct (step 32) the new passport is transferred from the safe towards the issue station (step 33). It is noted that this transferral does not yet constitute the proper issue of the passport.

If the introduced password or PIN-code is incorrect, the old passport is returned to the recipient (step 35) and the issue process ends (step 34).

The data on the data chip of the new passport are read, using the access code which is determined based upon the scanned MRZ-data of the new passport (step 36). These data allow the determination (by determination means) of the correctness of the new passport (step 37).

If it is not the correct new passport, the new passport is stored internally (step 42) and the old passport is returned to the recipient (step 43) whereafter the process is ended (step 44).

However, if it is the correct new passport a fingerprint (or other biometrical data) is taken by a scanning means (step 38) which is compared by comparation means (step 39) with the fingerprint stored in the data chip of the new passport. If the fingerprint is not correct, steps 42-44 follow (see above).

When the fingerprint scanned is identical to the stored fingerprint the new passport is issued by an issue port of the issue station (step 41a), whereas the old passport is invalidated (and possibly returned to the recipient), destroyed or internally stored (step 41b) and the issue is digitally reported to the issue authority (step 41c), which will end the procedure (step 44).

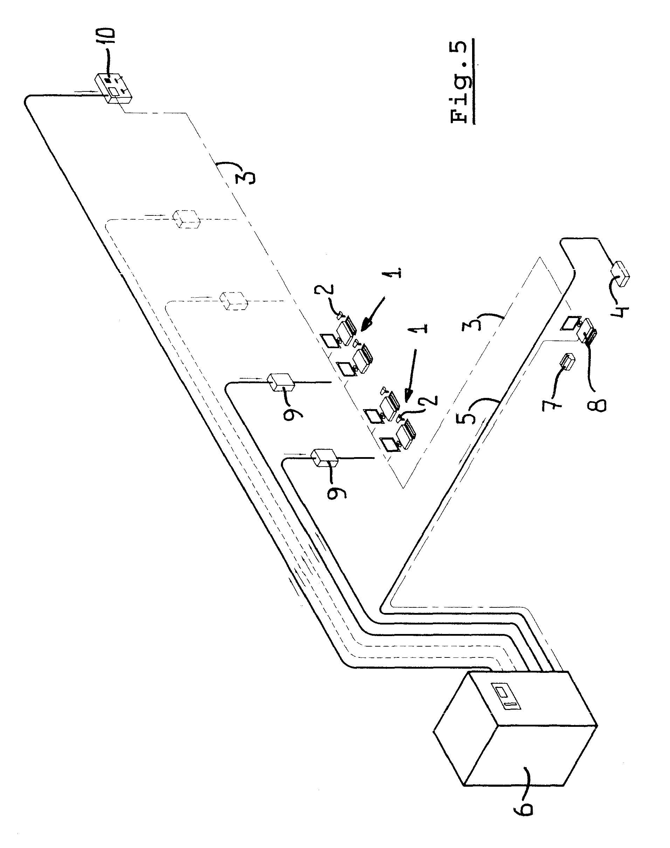

Referring to figure 5, an arrangement embodying features of the invention is illustrated schematically. Counters 1 are shown where an applicant/recipient meets an employee. During the application process the applicant will report at such a counter 1. An old document is checked (when available) and the identity of the applicant is determined by the employee. The counter comprises means 2 for making a facial scan or for taking fingerprints. Each counter 1 is connected to a data network 3.

Basically, each counter 1 is equipped for performing the tasks according to steps 1-13 according to figure 1 and steps 20-25 according to figure 3.

A filling station 4 is present for introducing a new document (step 18 of figure 2). A transfer line 5 connects the filling station to a storage facility 6. A MRZ-reader 7 and terminal 8 (both connected to network 3) enable steps 16 and 17 (figure 2) to be carried out.

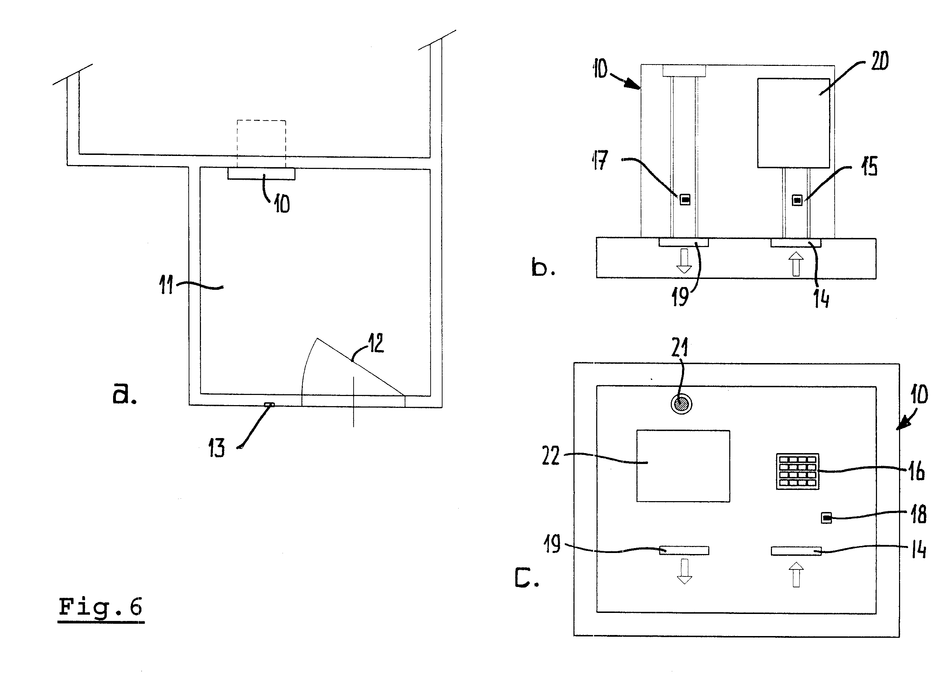

The storage facility 6 connects to counter units 9 for delivering a new document to the counters 1 (issue by employee) and to an issue station 10 (automated issue). The issue station is elucidated further by reference to figure 6.

Figure 6a illustrates schematically in a top plan view the arrangement of an issue station 10. It is located in an enclosed space 11 having an access door 12. An RFID-tag or data chip reader 13 controls the unlocking of the door 12 (steps 26-28 of figure 4).

Figure 6b shows the internal components of the issue station 10, whereas figure 6c shows a frontal view of the issue station 10. A reception slot 14 (or intake) is provided for introduction of the collecting voucher (or old document) according to step 29. An RFID-tag or data chip reader 15 is positioned behind the intake 14 for performing step 30. A keybord 16 allows the introduction of a password (step 31).

If the collecting voucher is not accepted, the intake 14 will return the collecting voucher (old document), see steps 35 or 43.

The new document arrives from the storage facility 6 at the issue station (step 33) where a data chip reader 17 reads the data chip (step 36), using the MRZ-data. After verification (step 37) of the new document and after taking a fingerprint by finger scanner 18 (steps 38-40) an issue port 19 is opened for issuing the new document (step 41a). The old document or collecting voucher is invalidated or safeguarded in component 20 connected to the intake 14.

A camera 21 may be provided for a facial scan or for other safety purposes. A display 22 completes the issue station.

The invention is not limited to the embodiment described above which may be varied widely within the scope of the invention as defined by the appending claims.

## Claims

1. Assembly for the issue of a document, for example a passport, which comprises a data chip, to a recipient, with
- first means for providing the recipient upon request with a unique collecting voucher for said document, said first means comprising identification means for determining identification data of the recipient and loading said data in a RFID-tag to be attached irreversibly to said collecting voucher or in a data chip already present thereon, wherein the first means further comprise transmitting means for transmitting to a document manufacturer identification data for loading said data in the data chip of the document to be issued;
- storage means for safely storing the document upon receipt thereof from the document manufacturer;
- verification means for at least verifying the collecting voucher upon presentation by the recipient;
- issue means for issuing the document; and
- transferring means for transferring the document from the storage means towards the issue means.

2. Assembly according to claim 1, wherein the identification means comprise means for determining biometric data of the recipient.

3. Assembly according to claim 2, wherein said means for determining biometric data of the recipient comprise a device for taking fingerprints and/or for making a facial scan.

4. Assembly according to claim 2 or 3, wherein the collecting voucher is a former document, such as a passport, to be replaced by the document to be issued.

5. Assembly according to any of the claims 2-4, wherein the first means comprise means for encrypting the data, for example as an application number, on the RFID-tag or data chip.

6. Assembly according to any of the previous claims, wherein the storage means comprise a safe room for the documents.

7. Assembly according to claim 6, wherein the storage means further comprise scanning means for scanning MRZ-data of the document and a database for said MRZ-data.

8. Assembly according to any of the previous claims, wherein the verification means comprise means for scanning the RFID-tag or data chip of the collecting voucher and means for, based upon the scanned data of the RFID-tag or data chip, determining the presence of the document to be issued in the storage means and for activating the transferring means for transferring the document from the storage means towards the issue means.

9. Assembly according to claim 8, wherein the issue means comprise an access door to an issue station controlled by the verification means.

10. Assembly according to claim 9, wherein the issue station comprises a reception means for receiving the collecting voucher and for reading the RFID-tag or data chip and an issue port for the document to be issued.

11. Assembly according to claim 10, wherein the issue station further comprises input means for a password.

12. Assembly according to claim 10 or 11, wherein the issue station comprises reading means for reading the data chip of the document to be issued.

13. Assembly according to claim 12 in combination with claim 7, wherein the reading means are controlled by the MRZ-data.

14. Assembly according to any of the claims 10-13, wherein the issue station comprises scanning means for fingerprints and/or a facial scan and comparation means for comparing the scan results with the data on the data chip of the document to be issued.

15. Assembly according to any of the claims 10-14, wherein the issue station comprises means for invalidating and/or safeguarding the collecting voucher.
